# EUROPÄISCHE PATENTSCHRIFT

(11) **EP 1 712 118 B1**
(45) Veröffentlichungstag und Bekanntmachung des Hinweises auf die Patenterteilung: **27.02.2008**
(21) Anmeldenummer: 06006876.4
(22) Anmeldetag: 31.03.2006
(51) Int. Cl.: A01D 43/063

(54) **Grasfangkorb**
Grass collection basket
Caisse de ramassage d'herbe

(30) Priorität: 15.04.2005 DE 102005017405
(43) Veröffentlichungstag der Anmeldung: 18.10.2006
(73) Patentinhaber: Wolf-Garten AG, 4702 Oensingen (CH)
(72) Erfinder: Held, Peter, 57584 Scheuerfeld (DE); Kipping, Andreas, 57537 Selbach (DE)
(74) Vertreter: Koch, Günther

(56) Entgegenhaltungen:
- EP-A- 0 960 823
- GB-A- 2 280 585
- GB-A- 2 414 914
- US-A- 4 648 238
- US-A- 4 905 861
- US-B1- 6 460 716

## Beschreibung

Die Erfindung bezieht sich auf einen Grasfangkorb für Gartengeräte und insbesondere auf einen Grasfangkorb für Rasenmäher oder Vertikutiergeräte. Um bei derartigen Grasfangkörben das Transportvolumen und damit auch die Transportkosten zu vermindern, ist es üblich, den Grasfangkorb zweiteilig derart auszubilden, dass die beiden Teile ineinander geschachtelt ein vermindertes Volumen einnehmen. Diese im Allgemeinen aus elastischem Kunststoff bestehenden Teile des Fangkorbes müssen dann vom Benutzer betriebsmäßig miteinander verbunden werden. Um eine schnelle Montage ohne Zuhilfenahme von Schrauben und Werkzeugen durchführen zu können, ist es üblich, mindestens einen Teil an der Trennfuge mit Haken-artigen Laschen zu versehen, die in entsprechende Ausnehmungen an der Trennfuge des anderen Teils eingerastet werden müssen. Die Anordnung der Laschen und Ausnehmungen kann auch wechselseitig in der Weise erfolgen, dass abwechselnd Haken und Ausnehmungen vorhanden sind. Eine solche Ausbildung ermöglicht es, die Teile als Gleichteile auszuführen.

Ein derartiger Grasfangkorb für Rasenmäher ist in der GB 2 280 585 A beschrieben. Hierbei weist der Deckel ein umlaufendes nach unten offenes U-Profil mit seitlichen Schlitzen auf, in das der obere Rand des Grasfangkorbes einsteckbar ist, an dem als Befestigungsmittel in Abständen im Querschnitt dreieckige Widerhaken angeordnet sind, die in die Schlitze des freien Schenkels des U-Profils einrasten müssen. Bei dieser Anordnung ist es jedoch nicht vorgesehen, dass die beiden Teile, nämlich Behälter und Deckel, gleich ausgebildet sind und zum Transport ineinander geschachtelt werden können.

Wenn ein solcher Rasenmäher dem Käufer mit den zur Verminderung des Transportvolumens ineinander geschachtelten Teilen des Grasfangkorbes geliefort wird, dann ergeben sich für den unerfahrenen Laien häufig Schwierigkeiten beim Zusammensetzen der Fangkorbteile, die darin begründet sind, dass die Rastlaschen fast gleichzeitig verrastet werden müssen. Steht jedoch bei diesem Vorgang eine Lasche außerhalb der vorgesehenen Ausnehmung oder springt eine Lasche etwa durch einseitigen Montagedruck unbemerkt wieder aus der Ausnehmung heraus, ist eine Demontage der Fangkorbteile aufgrund der Hakengeometrie nahezu unmöglich. Der Montagevorgang wird durch die geringe Steifigkeit der noch unverbundenen Fangkorbteile zusätzlich erschwert.

Aus der US-B1-6 460 716 ist ein Plastikbehälter für Nahrungsmittel bekannt, bei dem der Basisteil mit einem Deckel dicht verschließbar ist, aber leicht zu öffnen sein soll. Der Verschluss erfolgt über zwei über den gesamten Umfang verlaufende ineinandergreifende einrastbare U-Profile, von denen das Deckelprofil zur Öffnung nach außen spreizbar ist. Als Vorbild für einen raumsparend transportablen Rasenmäher-Grasfangkorb kann dieser bekannte Plastiklebensmittelbehälter jedoch schon deshalb nicht dienen, weil der Deckel nicht in umgekehrter Lage raumsparend auf das Basisteil aufsetzbar ist.

Der Erfindung liegt daher die Aufgabe zugrunde, einen aus wenigstens zwei Teilen bestehenden Grasfangkorb zu schaffen der zum Transport raumsparend verpackt werden kann und dessen Einzu vom Benutzer schnell und sicher zusammengefügt werden können.

Gelöst wird die gestellte Aufgabe durch die gesamtheit der im Patentanspruchs 1 angegebenen Merkmale. Dadurch, dass die U-Profile über den gesamten Umfang der Trennfuge angeordnet sind, kann das Profil mit dem kleineren Querschnitt in das größere Profil kontinuierlich an einer beliebigen Stelle beginnend eingefügt werden. Bevorzugt wird mit dem Einsatz im Bereich der Fangkorböffnung begonnen und es erfolgt dann eine durchgehende Einführung des kleineren Profils in das größere, wobei eine Auslenkung nach außen nicht zu befürchten ist. Die Verbindung der beiden Profile kann kraftschlüssig erfolgen, da die Elastizität einen genügenden Flächendruck gewährleistet. Zu bevorzugen ist aus Sicherheitsgründen jedoch eine formschlüssige Verbindung, indem das Ende des freien Schenkels des kleineren Profils auf einem nach innen stehenden Hakenfortsatz des größeren Profils abgestützt wird. Dieses Einrasten, das den Formschluss bildet, wird dem Benutzer beim Zusammenfügen erkennbar, so dass hierdurch der ordnungsgemäße Zusammenbau deutlich erkennbar wird.

Zweckmäßige Ausgestaltungen der Rastverbindung ergeben sich aus den Unteransprüchen 2 bis 4. Gemäß der im Anspruch 1 gekennzeichneten Ausführung der Erfindung besteht der Fangkorb aus einem großvolumigen Unterteil und einem ausgewölbten Deckelteil, der umgekehrt raumsparend zum Versand in den Unterteil eingesetzt werden kann. Das U-Profil mit dem größeren Querschnitt steht von der Außenseite des Deckelteils vor, so dass sich dieses Profil auch im umgekehrten Zustand des Deckels auf dem Profil kleineren Querschnitts (unverrastet) abstützt. Löcher im oberen Abschnitt des größeren U-Profil-Querschnitts ermöglichen durch Einsatz eines geeigneten Werkzeugs eine Abspreizung von den Hakenfortsätzen, so dass ein Lösen möglich wird, falls dies ausnahmsweise einmal nötig ist. Eine ähnliche Anordnung zeigt die US-A-4 905 861 zum öffnen des eingerardeten Deckels eines Farbbehältern

Das Rastprofil der beiden Teile wird in der Beschreibung als "U-förmig" angegeben. Es ist klar, dass diese Form nicht exakt U-förmig ausgebildet sein muss, sondern dass auch Abweichungen im Hinblick auf eine V-Form möglich sind oder das Einsatzprofil abgekantet oder abgerundet ist.

Nachstehend wird ein Ausführungsbeispiel der Erfindung anhand der Zeichnung beschrieben. In der Zeichnung zeigen:

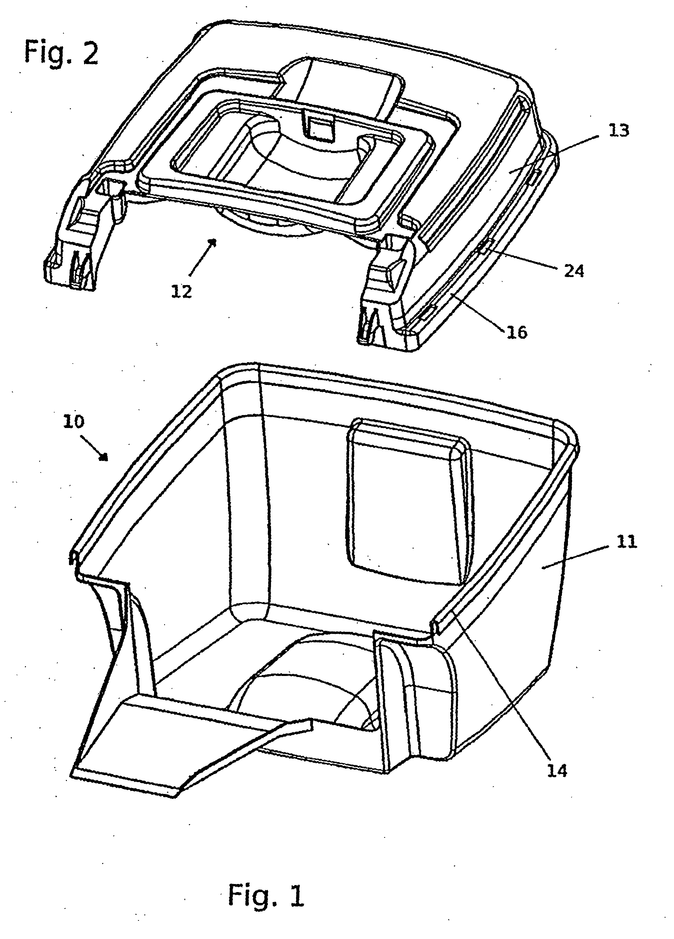

Fig. 1 ist eine perspektivische Ansicht des Unterteils des erfindungsgemäß ausgebildeten Fangkorbes;
Fig. 2 ist ein perspektivische Ansicht des auf dem Unterteil aufsetzbaren und verrastbaren Deckels;
Fig. 3 ist eine Teilschnittansicht der zu verbindenden U-Profile am Rand von Behälterunterteil bzw. Deckel vor der Verrastung;
Fig. 4 ist eine Teilschnittansicht der zu verbindenden U-Profile am Rand von Behälterunterteil bzw. Deckel nach der Verrastung.

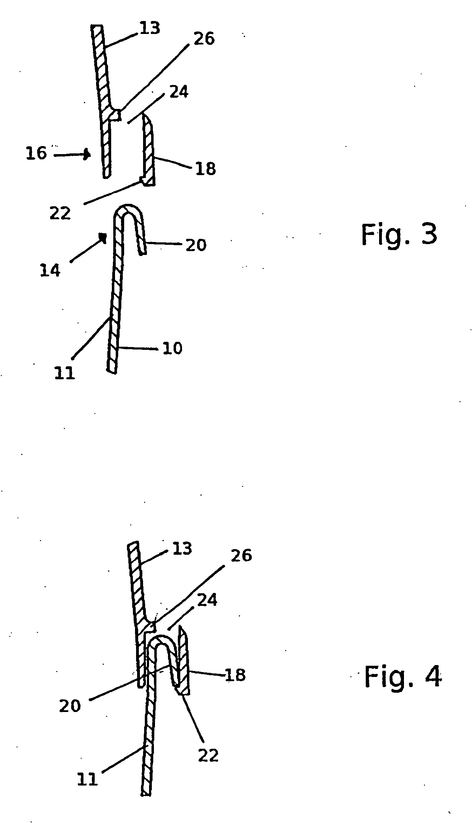

Der in der Zeichnung dargestellte Grasfangkorb für einen Rasenmäher besteht aus einem Behälterunterteil 10 mit seitlich und an der Rückseite umlaufenden Wänden und einer vorderen Fangöffnung, über die das Gras über Leitplatten geführt in den Behälter gefördert wird. Auf den Behälterunterteil ist ein Deckel-artiger Behälteroberteil 12 aufsetzbar, der das Fangvolumen nach oben hin vergrößert. Um das Transportvolumen fabrikneuer Rasenmäher zu verringern, ist der Deckeloberteil 12 so ausgebildet, dass er in umgekehrter Lage in den Behälterunterteil 10 einpasst. Dabei ist der Deckeloberteil so geformt, dass im umgekehrt eingesetzten Zustand die Seitenwände 13 und die hintere Wand des Deckeloberteils den Seitenwänden 11 bzw. der hinteren Wand des Behälterunterteils von innen anliegen, wodurch das Transportvolumen um die Deckelhöhe verringert wird.
Um den Deckeloberteil 12 betriebsmäßig mit dem Behälterunterteil 10 fest zu verbinden, weist der Behälterunterteil 10 am oberen Rand ein U-Profil 14 auf, das sich über den oberen Rand der Seitenwände und der Rückwand erstreckt. Diesem U-Profil ist ein weiteres U-Profil 16 zugeordnet, das sich am Unterrand des Behälterdeckels 12 über die Seitenwände 13 und die Rückwände nach außen vorspringend derart erstreckt, dass das U-Profil 14 in das entsprechend bemessene U-Profil 16 eingeschoben werden kann. Das Einsetzen des Profils 14 in das Profil 16 kann, beginnend am Vorderteil, kontinuierlich über den gesamten Umfangsbereich eingesteckt werden. Im eingesteckten Zustand wird durch die Elastizität der U-Profile 14 und 16 ein Reibungsschluss erzeugt, der eine dauerhafte Halterung des Deckels 12 auf dem Behälterunterteil 10 gewährleisten kann. Aus Sicherheitsgründen ist jedoch eine Formschlussverbindung zu bevorzugen. Diese Formschlussverbindung kann dadurch bewirkt werden, dass der freie Schenkel 18 des U-Profils 16, dessen anderer Schenkel von der umlaufenden Deckelwand 13 gebildet wird, mit nach innen stehenden Rasthaken 22 ausgestattet ist, und an diesen Rasthaken stützt sich der freie Schenkel 20 des U-Profils 14 im zusammengesetzten Zustand formschlüssig ab, wie dies in Fig. 4 dargestellt ist. Diese Hakenausbildung kann sich über das gesamte U-Profil 16 erstrecken oder es kann abschnittsweise vorgesehen werden.

Das U-Profil 16 ist in der Basis mit im Abstand zueinander angeordneten Ausnehmungen 24 ausgestattet, die zweckmäßigerweise bis zum freien Schenkel 18 verlaufen, jedoch auf der gegenüberliegenden Seite einen Vorsprung 26 belassen. Durch diese Ausnehmungen 24 kann ein geeignetes Werkzeug eingesetzt werden, mit dem der freie Schenkel 20 von den Rasthaken 22 abgehoben werden kann, um den Formschluss der beiden Behälterteile aufzuheben und den Deckel vom Unterteil abheben zu können, falls dies eine Reparatur oder Überprüfung erforderlich macht.

Die Behälterteile des Fangkorbes sind zweckmäßigerweise aus elastischem Kunststoff ausgebildet. Sie können jedoch auch aus Blech bestehen. Gemäß dem dargestellten Ausführungsbeispiel wurde der Grasfangkorb in einer horizontalen Ebene geteilt. Die Teilungsfugen müssen jedoch nicht in einer Ebene liegen, sondern können auf beliebig gekrümmten Bahnen verlaufen unter der Voraussetzung, dass ein durchgehendes Eingreifen der Nuten möglich wird. Die Teilung des Fangkorbes kann auch in horizontalen oder schrägen Ebenen erfolgen, wobei die Ausbildung der beiden Teile derart gewählt wird, dass sie ineinander geschachtelt für den Transport ein möglichst geringes Volumen einnehmen.

Ein derartiger Fangkorb ist insbesondere für handgeführte Rasenmäher mit Antrieb durch Verbrennungskraftmotor oder Elektromotor bestimmt. Er ist jedoch auch für andere Gartengeräte, beispielsweise Vertikutierer, geeignet, bei denen ein abgeschnittenes oder ausgeworfenes Gut aufgesammelt werden muss.

## Patentansprüche

1. Zweiteiliger Grasfangkorb für Rasenmäher, der aus einem großvolumigen Unterteil (10) und einem ausgewölbten Deckelteil (12) besteht, der raumsparend zum Transport in umgekehrter Lage in den Unterteil (10) einpasst und in aufrechter Lage ohne Zuhilfenahme von Werkzeugen mit dem Unterteil (10) durch Rastmittel verbindbar ist, wobei die Rastmittel am Unterteil (10) aus einem durchgehenden U-Profil (14) bestehen, das in ein U-Profil (16) des Deckelteils (12) einsteckbar ist und sich im eingesteckten Zustand mit dem Ende seines freien Schenkels (20) an einem Rasthaken (22) formschlüssig abstützt, der am freien Schenkel (18) des U-Profils (16) nach innen einstehend angeordnet ist und das U-Profil (16) des Deckelteils (12) von diesem nach außen derart vorsteht, dass sich dieses Profil bei umgekehrt aufgelegtem Deckelteil (12) auf dem Profil (14) des Unterteils (10) unverrastet abstützt.

2. Grasfangkorb nach Anspruch 1,
**dadurch gekennzeichnet, dass** sich der Rasthaken (22) über die gesamte Profillänge oder über Abschnitte hiervon astreckt.

3. Grasfangkorb nach den Ansprüchen 1 und 2,
**dadurch gekennzeichnet, dass** im Basisteil des U-Profils (16) des deckelteils (12) in vorbestimmten Abständen Ausnehmungen (24) angeordnet sind.

4. Grasfangkorb nach Anspruch 3,
**dadurch gekennzeichnet, dass** die Ausnehmungen (24) vom Rand des freien Schenkels (18) bis zu einem Vorsprung (26) am gegenüberliegenden Abschnitt verlaufen.

## Claims

1. A two-part grass collection basket for lawnmowers, which comprises a lower part (10) of large volume and an outwardly curved cover part (12) which fits into the lower part (10) in an inverted condition to save space for transport purposes and which in the upright position can be connected to the lower part (10) by latching means without the assistance of tools, wherein the latching means on the lower part (10) comprise a continuous U-shaped portion (14) which can be pushed into a U-shaped portion (16) of the cover part (12) and which in the pushed-in condition bears in positively locking relationship with the end of its free limb (20) against a latching hook (22) which is arranged projecting inwardly at the free limb (18) of the U-shaped portion (16) and the U-shaped portion (16) of the cover part (12) projects outwardly therefrom in such a way that said shaped portion is supported in an unlatched condition on the shaped portion (14) of the lower part (10) when the cover part (12) is placed thereon in an inverted position.

2. A grass collection basket according to claim 1 **characterised in that** the latching hook (22) extends over the entire shaped portion length or over parts thereof.

3. A grass collection basket according to claims 1 and 2 **characterised in that** openings (24) are arranged in the base part of the U-shaped portion (16) of the cover part (12) at predetermined spacings.

4. A grass collection basket according to claim 3 **characterised in that** the openings (24) extend from the edge of the free limb (18) to a projection (26) on the oppositely disposed part.

## Revendications

1. Bac de ramassage d'herbe en deux parties pour tondeuse à gazon, composé d'une partie inférieure à grand volume (10) et d'un couvercle (12) bombé qui, pour réduire l'encombrement durant le transport, s'emboîte à l'envers dans la partie inférieure (10) et qui à l'endroit peut être relié à la partie inférieure (10) sans l'aide d'outils, par des moyens d'enclenchement, lesdits moyens d'enclenchement étant formés, sur la partie inférieure (10), par un profilé en U (14) ininterrompu pouvant s'emboîter dans un profilé en U (16) du couvercle (12) et prenant appui par engagement positif, à l'état emboîté, avec l'extrémité de son aile libre (20), sur un crochet d'enclenchement (22) qui est disposé, en faisant saillie vers l'intérieur, sur l'aile libre (18) du profilé en U (16), et le profilé en U (16) du couvercle (12) faisant saillie de ce dernier vers l'extérieur, de manière à ce que, lorsque le couvercle (12) est posé à l'envers, ce profilé prenne simplement appui sur le profilé (14) de la partie inférieure (10) sans être enclenché.

2. Bac de ramassage d'herbe selon la revendication 1, **caractérisé en ce que** le crochet d'enclenchement (22) s'étend sur toute la longueur du profilé ou sur des segments de ce dernier.

3. Bac de ramassage d'herbe selon les revendications 1 et 2, **caractérisé en ce que** des évidements (24) sont ménagés à intervalles prédéfinis dans la base du profilé en U (16) du couvercle (12).

4. Bac de ramassage d'herbe selon la revendication 3, **caractérisé en ce que** les évidements (24) s'étendent du bord de l'aile libre (18) jusqu'à une saillie (26) du segment opposé.
